(19) Europäisches Patentamt
European Patent Office
Office européen des brevets

(11) EP 4 404 307 A1

(12) **EUROPEAN PATENT APPLICATION**
published in accordance with Art. 153(4) EPC

(43) Date of publication:
**24.07.2024 Bulletin 2024/30**

(21) Application number: **22934331.4**

(22) Date of filing: **01.04.2022**

(51) International Patent Classification (IPC):
***H01M 4/62** (2006.01)* ***H01M 10/0525** (2010.01)*

(52) Cooperative Patent Classification (CPC):
**H01M 4/625; H01M 4/0404; H01M 4/13; H01M 4/131; H01M 4/136; H01M 4/1391; H01M 4/366; H01M 4/525; H01M 4/5825; H01M 4/62; H01M 4/622; H01M 4/623;**
H01M 10/0525; H01M 2004/021; H01M 2004/028;

(Cont.)

(86) International application number:
**PCT/CN2022/084860**

(87) International publication number:
**WO 2023/184497 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **FENG, Lingyun**
  **NINGDE CITY, Fujian 352100 (CN)**
- **FAN, Yanhuang**
  **NINGDE CITY, Fujian 352100 (CN)**

(74) Representative: **Gong, Jinping**
**CocreateIP**
**Neumarkterstr. 21**
**81673 München (DE)**

(54) **DISPERSANT COMPOSITION, POSITIVE ELECTRODE PLATE, SECONDARY BATTERY, BATTERY MODULE, BATTERY PACK, AND ELECTRIC APPARATUS**

(57) This application provides a dispersant composite, a positive electrode plate, a secondary battery, a battery module, a battery pack, and an electric apparatus. In particular, this application provides a dispersant composite including a dispersant and a wetting agent. The dispersant composite of this application can alleviate the problems of poor dispersion of positive electrode active material powder and high slurry viscosity during preparation of a positive electrode slurry, and further, can improve flexibility of the positive electrode plate.

EP 4 404 307 A1

(52) Cooperative Patent Classification (CPC): (Cont.)
Y02E 60/10

## Description

### TECHNICAL FIELD

This application relates to the field of battery technologies, and in particular, to a dispersant composite, a positive electrode plate, a secondary battery, a battery module, a battery pack, and an electric apparatus.

### BACKGROUND

Secondary batteries have been widely used in different fields such as new energy vehicles and energy storage power stations due to their advantages including high energy density, long service life, and energy saving and environmental friendliness. A positive electrode plate of a secondary battery mainly includes a current collector and an electrode film layer containing a positive electrode active substance. The positive electrode active substance and a dispersion medium can form a positive electrode slurry which is applied onto the electrode current collector to form a positive electrode plate.

The positive electrode active substance is generally used in the form of powder. Due to a large specific surface area and a large number of small particles of the positive electrode material powder, it is difficult to disperse the powder during preparation of the positive electrode slurry, leading to a slurry with such high viscosity that it is difficult to increase its solid content. Consequently, during coating, the electrode plate is prone to defects such as cracking, film peeling, uneven weight, particle scratching, or pinholes.

### SUMMARY

This application is made in view of the foregoing issues. An objective is to provide a composite including a flexible dispersant to alleviate the problems of poor dispersion of positive electrode active material powder and high slurry viscosity during preparation of a positive electrode slurry.

To achieve the foregoing objective, this application provides a dispersant composite, a positive electrode plate, a secondary battery, a battery module including the secondary battery, a battery pack including the battery module, and an electric apparatus including the secondary battery, battery module, or battery pack.

A first aspect of this application provides a dispersant composite including a dispersant and a wetting agent, where

the dispersant includes a polymer, the polymer including:

- a first monomer unit represented by formula 1;
- a second monomer unit being at least one selected from a group consisting of a monomer unit represented by formula 2 and a monomer unit represented by formula 3; and
- a third monomer unit being at least one selected from a group consisting of a monomer unit represented by formula 4 and a monomer unit represented by formula 5;

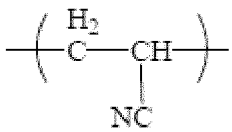

formula 1

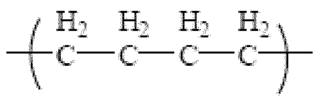

formula 2

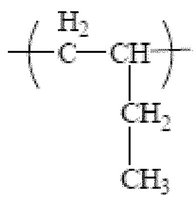

formula 3

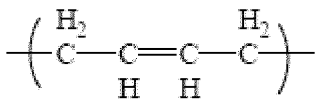

formula 4

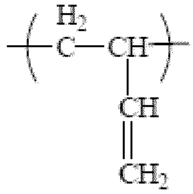

formula 5;

and

surface tension of the wetting agent is 20 mN/m-40 mN/m, and molecular structure of the wetting agent includes at least one of the following functional groups: -CN, $-NH_2$, -NH-, -N-, -OH, -C=O, -COO-, and -C(=O)-O-C(=O)-.

In some embodiments, based on a total mass of the polymer, a mass percentage of the first monomer unit is M1, M1 being 10%-55%, optionally 25%-55%.

In some embodiments, based on the total mass of the polymer, a mass percentage of the second monomer unit is M2, M2 being 40%-80%, optionally 50%-70%.

In some embodiments, based on the total mass of the polymer, a mass percentage of the third monomer unit is M3, M3 being 0%-10%, optionally 0.001%-2%.

In some embodiments, M3/(M2 + M3) is 0%-5%, optionally 0.001%-1%.

In some embodiments, the polymer is hydrogenated nitrile rubber.

In some embodiments, a weight-average molecular weight of the polymer is 50,000-500,000, optionally 150,000-350,000.

In some embodiments, based on a total mass of the positive electrode active material, a mass percentage of the dispersant is X1, X1 being 0.05%-1%, optionally 0.1%-0.5%.

In some embodiments, the wetting agent includes one or more selected from a small-molecule organic solvent and a low molecular weight polymer, where

the small-molecule organic solvent includes one or more selected from an alcohol amine compound, an alcohol compound, and a nitrile compound, where optionally, the alcohol amine compound has 1 to 16 carbon atoms, optionally 2 to 6 carbon atoms; and

the low molecular weight polymer includes one or more selected from maleic anhydride-styrene copolymer, polyvinylpyrrolidone, and polysiloxane, where optionally, a weight-average molecular weight of the low molecular weight polymer is below 6,000, optionally 3,000-6,000.

In some embodiments, a mass ratio of the dispersant to the wetting agent is 0.05-20, optionally 0.1-1, and further optionally 0.3-0.8.

A second aspect of this application provides a positive electrode active material composite including a positive electrode active material and the dispersant composite according to the first aspect of this application.

In some embodiments, based on a total mass of the positive electrode active material, a mass percentage of the dispersant is X1, X1 being 0.05%-1%, optionally 0.1%-0.5%.

In some embodiments, based on the total mass of the positive electrode active material, a mass percentage of the wetting agent is X2, X2 being 0.05%-2%, optionally 0.2%-0.8%.

In some embodiments, X1/X2 is 0.05-20, optionally 0.1-1, and further optionally 0.3-0.8.

In some embodiments, a specific surface area of the positive electrode active material is 15 $m^2/g$-25 $m^2/g$.

In some embodiments, the positive electrode active material includes $Li_{1+x}Fe_{1-y}A_yP_{1-z}R_zO_4$, where

$$-0.100 \leq x \leq 0.100;$$

$$0 \leq y \leq 1, \text{ optionally } 0.001 \leq y \leq 0.500;$$

$$0 \leq z \leq 0.100, \text{ optionally } 0.001 \leq z \leq 0.100;$$

A is one or more selected from Zn, Al, Na, K, Mg, Mo, W, Ti, V, Zr, Mn, Ni, Co, Ga, Sn, Sb, Nb, and Ge, optionally one or more from Mn, Ti, V, Ni, Co, and Mg; and
R is one or more selected from B, Si, N, and S.

In some embodiments, a surface of the positive electrode active material is coated with a carbon material.

A third aspect of this application provides a positive electrode slurry including the positive electrode active material composite according to the second aspect of this application, and optionally further including one or more of a solvent, a positive electrode conductive agent, and a positive electrode binder.

In some embodiments, the solvent includes N-methylpyrrolidone (NMP).

In some embodiments, the positive electrode binder includes one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode conductive agent includes one or more selected from superconducting carbon, acetylene black, carbon black, Ketjen black, carbon dots, carbon nanotubes, graphene, and carbon nanofiber.

In some embodiments, a solid content of the positive electrode slurry is 40%-70%, optionally 55%-65%.

In some embodiments, a viscosity of the positive electrode slurry at 20°C is 3,000 mpa.s-50,000 mpa.s, optionally 10,000 mpa.s-20,000 mpa.s.

A fourth aspect of this application provides a positive electrode plate including a positive electrode current collector and a positive electrode film layer disposed on at least one surface of the positive electrode current collector, where the positive electrode film layer includes the positive electrode active material composite according to the second aspect of this application, or is formed by applying the positive electrode slurry according to the third aspect of this application.

Optionally, the applying method is selected from pulling method, film drawing method, electrostatic spraying method, and spin coating method.

In some embodiments, based on a total mass of the positive electrode film layer,

a mass percentage of the positive electrode active material is W1, W1 being 90%-99.5%, optionally 95%-99%; and/or
in some embodiments, a mass percentage of the dispersant is W2, W2 being below 1%, optionally 0.1%-0.5%; and/or
in some embodiments, a mass percentage of the wetting agent is W3, W3 being below 2%, optionally 0.1%-0.5%; and/or
in some embodiments, a mass percentage of the positive electrode binder is W4, W4 being below 5.5%, optionally 1%-3%; and/or
in some embodiments, a mass percentage of the positive electrode conductive agent is W5, W5 being below 2.5%, optionally 0.1%-1%.

A fifth aspect of this application provides a secondary battery including the positive electrode plate according to the fourth aspect of this application.

A sixth aspect of this application provides a battery module including the positive electrode plate according to the fourth aspect of this application or the secondary battery according to the fifth aspect of this application.

A seventh aspect of this application provides a battery pack including the positive electrode plate according to the fourth aspect of this application, the secondary battery according to the fifth aspect of this application, or the battery module according to the sixth aspect of this application.

An eighth aspect of this application provides an electric apparatus including the positive electrode plate according to the fourth aspect of this application, the secondary battery according to the fifth aspect of this application, the battery module according to the sixth aspect of this application, or the battery pack according to the seventh aspect of this application.

The dispersant composite provided in this application can solve the problems of poor dispersion of positive electrode active material powder and high slurry viscosity during preparation of a positive electrode slurry, improving processability of the positive electrode slurry and performance of the secondary battery.

## BRIEF DESCRIPTION OF DRAWINGS

FIG. 1 shows an example of a measurement apparatus and measurement principle for a platinum plate method.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 7.
FIG. 7 is a schematic diagram of an electric apparatus using a secondary battery as a power source according to an embodiment of this application.

Description of reference signs:

1. battery pack; 2. upper box body; 3. lower box body; 4. battery module; 5. secondary battery; 51. housing; 52. electrode assembly; and 53. top cover assembly.
FIG. 8 shows an example of instruments used for positive electrode slurry viscosity test and a test process in an example of this application.
FIG. 9 shows an example of a method for folding filter in a slurry filtration performance test in an example of this application.

**DESCRIPTION OF EMBODIMENTS**

The following further describes implementations of this application in detail with reference to the embodiments. The following detailed descriptions of the embodiments are intended to illustrate the principle of this application, rather than to limit the scope of this application, meaning this application is not limited to the embodiments described herein.
The following specifically discloses embodiments of the dispersant composite, positive electrode plate, secondary battery, battery module, battery pack, and electric apparatus of this application with reference to detailed descriptions. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art.
"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.
Unless otherwise specified, all the embodiments and optional embodiments of this application can be combined with each other to form new technical solutions.
Unless otherwise specified, all the technical features and optional technical features of this application can be combined with each other to form new technical solutions.
Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.
Unless otherwise specified, "include" and "contain" mentioned in this application are inclusive or may be exclusive. For example, the terms "include" and "contain" can mean that other unlisted components may also be included or contained, or only listed components are included or contained.
Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).
It should be noted that in the specification, a median particle size $D_v50$ is a corresponding particle size when a cumulative volume distribution percentage of a positive electrode active material reaches 50%. In this application, the

median particle size $D_v50$ of the positive electrode active material may be measured by using a laser diffraction particle size analysis method. For example, the median particle size $D_v50$ is measured by using a laser particle size analyzer (for example, Malvern Master Size 3000) according to the standard GB/T 19077-2016.

In the specification, the term "coating layer" is a substance layer enveloping the core, the substance layer can completely or partially envelope the core, and the use of "coating layer" is only for ease of description but not intended to limit the present invention. Similarly, the term "thickness of the coating layer" refers to a thickness of the substance layer enveloping the core in a radial direction of the core.

In the specification, the term "source" is a compound that is a source of an element, for example, types of the "source" include but are not limited to carbonates, sulfates, nitrates, elemental substances, halides, oxides, and hydroxides.

[Dispersant composite]

A first aspect of this application provides a dispersant composite including a dispersant and a wetting agent, where
the dispersant includes a polymer, the polymer including:

a first monomer unit represented by formula 1;
a second monomer unit being at least one selected from a group consisting of a monomer unit represented by formula 2 and a monomer unit represented by formula 3; and
a third monomer unit being at least one selected from a group consisting of a monomer unit represented by formula 4 and a monomer unit represented by formula 5;

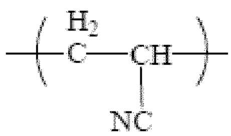
formula 1

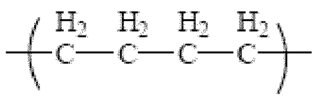
formula 2

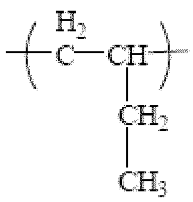
formula 3

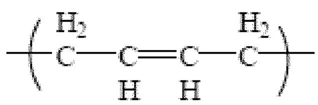
formula 4

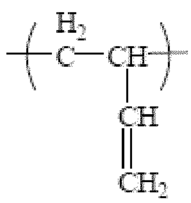
formula 5;

and
surface tension of the wetting agent is 20 mN/m-40 mN/m, and molecular structure of the wetting agent includes at least one of the following functional groups: -CN, $-NH_2$, -NH-, -N-, -OH, -C=O, -COO-, and -C(=O)-O-C(=O)-.

The inventors have found that a ratio of the first, second, and third monomer units may affect the dispersion effectiveness of the dispersant, which in turn affects fluidity, viscosity, and filtration performance of a positive electrode slurry, and may also affect battery performance.

In some embodiments, based on a total mass of the polymer, a mass percentage of the first monomer unit is M1, M1 being 10%-55% (for example, 10%, 15%, 20%, 25%, 30%, 32%, 35%, 40%, 45%, 50%, or 55%), optionally 25%-55%. The percentage M1 affects solubility of the polymer and brittleness of an electrode plate. If the percentage M1 is higher than 55%, the dispersion and/or brittleness of the electrode plate may be poor. If the percentage M1 is lower than 10%, the solubility of the polymer in a solvent (for example, NMP) becomes poorer, thereby leading to an uneven slurry.

In some embodiments, based on the total mass of the polymer, a mass percentage of the second monomer unit is M2, M2 being 40%-80% (for example, 40%, 45%, 50%, 55%, 58%, 60%, 64%, 65%, 68%, 70%, 71%, 75%, or 80%), optionally 50%-70%. The percentage M2 affects swelling of the polymer. The percentage M2 being within the range of 40%-80% can ensure the polymer to have a weak polarity, better playing the role of the dispersant.

In some embodiments, based on the total mass of the polymer, a mass percentage of the third monomer unit is M3, M3 being 0%-10% (for example, 0.001%, 0.005%, 0.01%, 0.05%, 0.1%, 0.3%, 0.4%, 0.5%, 1%, 1.3%, 1.8%, 2%, 3%, 3.8%, 4%, 5%, 5.2%, 6%, 7%, 8%, 9%, or 10%), optionally 0.001%-2%. The percentage M3 affects the solubility of the polymer and its adhesion to a positive electrode current collector (for example, aluminum foil). If the percentage M3 is excessively low, the slurry has poor adhesion. If the percentage M3 is excessively high, the slurry is prone to being dissolved in the electrolyte, affecting the battery performance.

In some embodiments, M3/(M2 + M3) is 0%-5% (for example, 0.001%, 0.005%, 0.01%, 0.05%, 0.1%, 0.5%, 1%, 2%, 3%, 4%, or 5%), optionally 0.001%-1%.

In some embodiments, the polymer is a random copolymer.

In some embodiments, the polymer is hydrogenated nitrile rubber.

Nitrile rubber (NBR) is a random copolymer formed by polymerizing acrylonitrile and butadiene monomers (for example, emulsion polymerization), and its general structural formula is as follows:

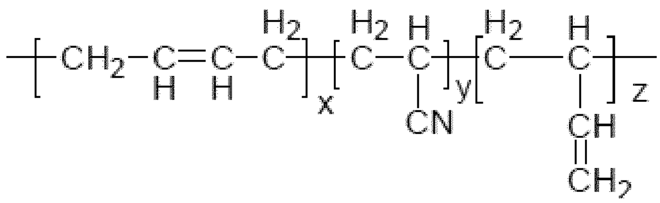

In nitrile rubber, the linkage manner of butadiene (B) and acrylonitrile (A) chain links is generally triads of BAB, BBA or ABB, ABA, and BBB. However, with an increased content of acrylonitrile, there is also a pentad of AABAA for linkage, which even becomes a bulk polymer of acrylonitrile. In nitrile rubber, the sequence distribution of butadiene is mainly trans-1,4 structure, and its microstructure is related to polymerization conditions. At a high polymerization temperature, the trans-1,4 structure decreases and cis-1,4 and 1,2-structures increase.

Hydrogenated nitrile rubber (HNBR) is a product obtained by hydrogenation and saturation of carbon-carbon double bonds on molecular chains of nitrile rubber, so it is also referred to as highly saturated nitrile rubber. The chemical formula of hydrogenated nitrile rubber is as follows:

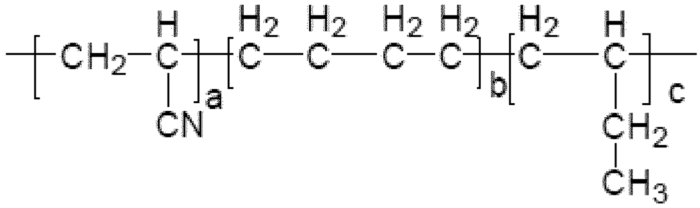

There are mainly three methods for preparing HNBR: ethylene-acrylonitrile copolymerization method, NBR solution hydrogenation method, and NBR emulsion hydrogenation method.

Due to weak polarity and good affinity with carbon-containing materials, hydrogenated nitrile rubber can act on the surface of particles of a positive electrode active material (especially a carbon-containing positive electrode active material), preventing inter-particle agglomeration through steric hindrance. In addition, hydrogenated nitrile rubber also features high strength and low glass transition temperature, which can improve flexibility of the electrode plate.

In some embodiments, a weight-average molecular weight of the polymer is 50,000-500,000 (for example,

50,000, 60,000, 70,000, 80,000, 90,000, 100,000, 150,000, 200,000, 250,000, 300,000, 350,000, 400,000, 450,000, or 500,000), optionally 150,000-350,000. When the molecular weight of the polymer is lower than 50,000, the slurry exhibits poor film-forming properties and is in a viscoelastic state on the positive electrode plate, so the electrode plate is prone to sticking to the roller during cold pressing. When the molecular weight of the polymer is large, the solubility of the polymer becomes poorer, which is not conducive to dispersion of the slurry.

In some cases, infiltration of the positive electrode active material in NMP (N-methylpyrrolidone) is poor, and thus stability of the slurry is poor, which is manifested by low solid content of the slurry, decreased viscosity of the slurry after placing, and the like, so the slurry cannot be used normally. The inventors have found that functional groups such as N-containing groups (for example, -CN/-$NH_2$-/-N-), oxygen-containing groups (for example, -C=O/-COOH/- CO-OR/epoxy), or benzene rings have good affinity for positive electrode active materials (especially microporous positive electrode active materials that have carbon coating with high graphitization on the surface), and small-molecule wetting agents containing these functional groups can effectively improve infiltration of the positive electrode active materials in solvents (for example, N-methylpyrrolidone).

The surface tension of the wetting agent may be obtained from a supplier or may be obtained by using a surface tension meter in accordance with a measurement method available in the art.

An example of the measurement method may be the platinum plate method, and its principle is as follows: when a sensing platinum plate is immersed into a to-be-measured liquid, the periphery of the platinum plate in the liquid is subjected to the action of surface tension, and surface tension of the liquid pulls the platinum plate downward as much as possible. When the surface tension of the liquid and other related forces balance with an equilibrium force, the sensing platinum plate stops immersing into the liquid. In this case, an equilibrium sensor of the instrument measures depth of immersion and converts it into a surface tension value of the liquid.

In the specific test process, the test steps of the platinum plate method are as follows: (1) gradually immersing the platinum plate into the liquid; (2) in the state of being immersed into the liquid surface, sensing the equilibrium value by the sensor; and (3) converting the sensed equilibrium value into the surface tension value and showing the value.

The calculation formula for the surface tension is as follows:

$$P = mg + L\gamma \cdot \cos\theta - sh\rho g$$

Equilibrium force = gravity of platinum plate + sum of surface tensions - buoyancy on platinum plate

(up) (down) (up)

m: weight of the platinum plate
g: gravity (9.8 N/Kg)
L: perimeter of the platinum plate
$\gamma$: surface tension of the liquid
$\theta$: contact angle between the liquid and the platinum plate
s: area of the cross section of the platinum plate
h: depth of the platinum plate immersed
$\rho$: density of the liquid

FIG. 1 shows an example of a measurement apparatus and measurement principle for a platinum plate method.

In some embodiments, the wetting agent includes one or more selected from a small-molecule organic solvent and a low molecular weight polymer, where

the small-molecule organic solvent includes one or more selected from an alcohol amine compound, an alcohol compound, and a nitrile compound, where optionally, the alcohol amine compound has 1 to 16 carbon atoms, optionally 2 to 6 carbon atoms; for example, isopropanolamine and 2-amino-2methyl-1-propanol; and

the low molecular weight polymer includes one or more selected from maleic anhydride-styrene copolymer, polyvinylpyrrolidone, and polysiloxane, where optionally, a weight-average molecular weight of the low molecular weight polymer is below 6,000, for example, 70-6,000 (for example, 70-100, 100-500, 500-1,000, 1,000-2,000, 2,000-3,000, 3,000-4,000, 4,000-5,000, or 5,000-6,000), optionally 3,000-6,000.

In some embodiments, in the dispersant composite, a mass ratio of the dispersant to the wetting agent is 0.05-20 (for example, 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 3, 4, 5, 10, 15, or 20), optionally 0.1-1, and further optionally 0.3-0.8.

[Positive electrode active material composite]

A second aspect of this application provides a positive electrode active material composite including a positive electrode active material and the dispersant composite according to the first aspect of this application.

The dispersant (for example, hydrogenated nitrile rubber) absorbs electrolyte in the electrolyte and thus has large swelling, so an excessive addition may affect direct current resistance (DCR) at room temperature. In some embodiments, based on a mass of the positive electrode active material, a mass percentage of the dispersant is X1, X1 being 0.05%-1% (for example, 0.05%, 0.1%, 0.2%, 0.25%, 0.3%, 0.4%, 0.5%, 0.6%, 0.7%, 0.8%, 0.9%, or 1%), optionally 0.1%-0.5%. When X1 is 0.05%-1%, the dispersant can not only provide good dispersion effectiveness, but also be prevented from affecting a room temperature DCR and in turn affecting energy density of the battery in the case of excessive addition.

In some embodiments, based on the mass of the positive electrode active material, a mass percentage of the wetting agent is X2, X2 being 0.05%-2% (for example, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, or 2%), optionally 0.2%-0.8%. When X2 is 0.05%-2%, the wetting agent can provide good infiltration effectiveness, and excessive addition of the wetting agent can be avoided, which otherwise could affect the stability of the positive electrode or the electrolyte or affect the battery performance (for example, cycling performance).

In some embodiments, X1/X2 is 0.05-20 (for example, 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 3, 4, 5, 10, 15, or 20), optionally 0.1-1, and further optionally 0.3-0.8. When the ratio of the dispersant to the wetting agent is within the foregoing range, the positive electrode slurry has low viscosity and good fluidity and filtration performance.

In some embodiments, a specific surface area of the positive electrode active material is 15 $m^2$/g-25 $m^2$/g (for example, 15 $m^2$/g, 16 $m^2$/g, 17 $m^2$/g, 18 $m^2$/g, 19 $m^2$/g, 20 $m^2$/g, 21 $m^2$/g, 22 $m^2$/g, 23 $m^2$/g, 24 $m^2$/g, 25 $m^2$/g, or 26 $m^2$/g). A measurement method of the specific surface area includes but is not limited to gas adsorption BET method, for example, the method recorded in "GB/T 19587 Determination of the specific surface area of solids by gas adsorption using the BET method".

In some embodiments, the positive electrode active material includes $Li_{1+x}Mn_{1-y}A_yP_{1-z}R_zO_4$, where $0.100 \le x \le 0.100$, for example, x may be 0.006, 0.004, 0.003, 0.002, 0.001, 0, - 0.001, -0.003, -0.004, -0.005, -0.006, -0.007, -0.008, -0.009, or -0.10; $0 \le y \le 1$, optionally $0.001 \le y \le 0.500$, for example, y may be 0.1, 0.2, 0.25, 0.3, 0.35, 0.4, or 0.45; $0 \le z \le 0.100$, optionally $0.001 \le z \le 0.100$, for example, z may be 0.001, 0.002, 0.003, 0.004, 0.005, 0.006, 0.007, 0.008, 0.009, or 0.1; A is one or more selected from Zn, Al, Na, K, Mg, Mo, W, Ti, V, Zr, Fe, Ni, Co, Ga, Sn, Sb, Nb, and Ge, optionally one or more from Mn, Ti, V, Ni, Co, and Mg; and R is one or more selected from B, Si, N, and S.

In some embodiments, a surface of the positive electrode active material is coated with a carbon material.

Unless otherwise specified, in the foregoing chemical formula, when A is two or more elements, the foregoing limitation on the value range of y is not only a limitation on the stoichiometric number of each element as Abut also a limitation on the sum of the stoichiometric numbers of all elements as A. For example, when A is two or more elements A1, A2, ..., and An, the stoichiometric numbers y1, y2, ..., and yn of all of A1, A2, ..., and An must fall within the value range defined by this application for y, and the sum of y1, y2, ..., and yn must also fall within the value range. Similarly, in a case that R is two or more elements, the limitation on the value range of the stoichiometric number of R in this application also has the foregoing meaning.

In some embodiments, the positive electrode active material may be a positive electrode active material well known in the art and used for batteries. For example, the positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/5}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese

phosphate (for example, $LiMnPO_4$), a composite material of lithium manganese phosphate and carbon, lithium manganese iron phosphate, and a composite material of lithium manganese iron phosphate and carbon.

In some embodiments, the positive electrode active material used in this application is selected from: $LiFePO_4$, $LiFe_{0.8}V_{0.2}PO_4$, $LiFe_{0.8}V_{0.2}P_{0.97}S_{0.03}O_4$, $Li_{1.1}Fe_{0.8}V_{0.2}P_{0.97}S_{0.03}O_4$, and $Li_{1.1}Fe_{0.8}Sn_{0.2}P_{0.97}S_{0.03}O_4$. In some embodiments, the specific surface area of the positive electrode active material is 18 $m^2$/g-19 $m^2$/g.

[Positive electrode slurry]

A third aspect of this application provides a positive electrode slurry including the positive electrode active material composite according to the second aspect of this application, and optionally further including one or more of a solvent, a positive electrode conductive agent, and a positive electrode binder.

In some embodiments, the positive electrode slurry includes a solvent, and optionally the solvent includes N-methylpyrrolidone (NMP).

In some embodiments, the positive electrode slurry includes a positive electrode binder. Optionally, the positive electrode binder includes one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode slurry includes a positive electrode conductive agent. Optionally, the positive electrode conductive agent includes one or more selected from superconducting carbon, acetylene black, carbon black, Ketjen black, carbon dots, carbon nanotubes, graphene, and carbon nanofiber.

In this application, selecting an appropriate dispersant and/or wetting agent can increase the solid content of the positive electrode slurry and/or reduce the viscosity of the positive electrode slurry.

In some embodiments, a solid content of the positive electrode slurry is 40%-70% (for example, 40%, 45%, 50%, 55%, 58%, 60%, 64%, 65%, 68%, or 70%), optionally 55%-65%.

In some embodiments, a viscosity of the positive electrode slurry at 20°C is 3,000 mpa.s-50,000 mpa.s (for example, 3,000 mpa.s, 4,000 mpa.s, 5,000 mpa.s, 6,000 mpa.s, 7,000 mpa.s, 8,000 mpa.s, 9,000 mpa.s, 10,000 mpa.s, 11,000 mpa.s, 12,000 mpa.s, 13,000 mpa.s, 14,000 mpa.s, 15,000 mpa.s, 16,000 mpa.s, 17,000 mpa.s, 18,000 mpa.s, 19,000 mpa.s, 20,000 mpa.s, 30,000 mpa.s, 40,000 mpa.s or 50,000 mpa.s), optionally 10,000 mpa.s-20,000 mpa.s.

[Positive electrode plate]

A fourth aspect of this application provides a positive electrode plate including a positive electrode current collector and a positive electrode film layer disposed on at least one surface of the positive electrode current collector, where the positive electrode film layer includes the positive electrode active material composite according to the second aspect of this application, or is formed by applying the positive electrode slurry according to the third aspect of this application. The positive electrode film layer may be disposed on one surface of the positive electrode current collector or on two surfaces of the positive electrode current collector.

In some embodiments, based on a total mass of the positive electrode film layer,

a mass percentage of the positive electrode active material is W1, W1 being 90%-99.5% (for example, 90%, 91%, 92%, 93%, 94%, 95%, 96%, 97%, 98%, 99%, or 99.5%), optionally 95%-99%; and/or
in some embodiments, a mass percentage of the dispersant is W2, W2 being below 1% (for example, 0.001%, 0.005%, 0.01%, 0.05%, 0.1%, 0.2%, 0.3%, 0.4%, 0.5%, or 1%), optionally 0.1%-0.5%; and/or
in some embodiments, a mass percentage of the wetting agent is W3, W3 being below 2% (for example, 0.001%, 0.005%, 0.01%, 0.05%, 0.1%, 0.2%, 0.3%, 0.4%, 0.5%, 1%, or 2%), optionally 0.1%-0.5%; and/or
in some embodiments, a mass percentage of the positive electrode binder is W4, W4 being below 5.5% (for example, 0.001%, 0.005%, 0.01%, 0.05%, 0.1%, 0.5%, 1%, 1.2%, 1.5%, 2%, 2.3%, 2.5%, 2.7%, 3%, 4%, 5%, or 5.5%), optionally 1%-3%; and/or
in some embodiments, a mass percentage of the positive electrode conductive agent is W5, W5 being below 2.5% (for example, 0.001%, 0.005%, 0.01%, 0.05%, 0.1%, 0.2%, 0.3%, 0.4%, 0.5%, 0.6%, 0.7%, 0.8%, 0.9%, 1%, 2%, or 2.5%), optionally 0.1%-1%.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene

(PE)).

In some embodiments, one or more primer layers are also present between the positive electrode current collector and the positive electrode film layer to increase adhesion force between the positive electrode current collector and the positive electrode film layer. In some embodiments, the primer layer includes a polyacrylic acid-acrylate copolymer (for example, a polyacrylic acid-acrylate copolymer with a weight-average molecular weight of 300,000-350,000) and a conductive agent (for example, conductive carbon black (Super P)), and a mass ratio of them may be 60:40-40:60. An example of the preparation method includes: dissolving/dispersing the polyacrylic acid-acrylate copolymer and the conductive agent in deionized water to prepare a primer layer slurry; and applying the primer layer slurry onto one or two sides of the positive electrode current collector (for example, an aluminum foil), followed by drying, to obtain a positive electrode current collector with a conductive primer layer. In some embodiments, thickness of the primer layer is 1 $\mu$m-5 $\mu$m.

In some embodiments, the positive electrode material layer optionally further includes a binder. Types and percentages of the conductive agent and the binder are not specifically limited and can be selected according to actual requirements. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode material layer optionally further includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: dispersing the positive electrode active material, the conductive agent, the binder, and any other constituent in a solvent (for example, N-methylpyrrolidone) to form a positive electrode slurry; and applying the positive electrode slurry onto the positive electrode current collector, followed by processes such as drying and cold pressing, to obtain the positive electrode plate. Optionally, the applying method is selected from pulling method, film drawing method, electrostatic spraying method, and spin coating method.

A fifth aspect of this application provides a secondary battery including the positive electrode plate according to the fourth aspect of this application.

[Negative electrode plate]

In the secondary battery of this application, the negative electrode plate may include a negative electrode current collector and a negative electrode material layer that is disposed on the negative electrode current collector and includes a negative electrode active material. The negative electrode material layer may be disposed on one surface of the negative electrode current collector or on two surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material well known in the art and used for batteries. For example, the negative electrode active material may include at least one of the following materials: graphite (for example, artificial graphite and natural graphite), soft carbon, hard carbon, mesocarbon microbeads, carbon fiber, carbon nanotubes, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer optionally further includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer optionally further includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode material layer includes negative electrode active material artificial graphite, conductive agent acetylene black, and binder styrene-butadiene rubber (SBR).

In some embodiments, the negative electrode material layer optionally further includes other additives such as a thickener (for example, sodium carboxymethyl cellulose (CMC-Na)).

In some embodiments, the negative electrode plate may be prepared in the following manner: dispersing the constituents used for preparing the negative electrode plate, for example, the negative electrode active material, the conductive agent, the binder, and any other constituent, in a solvent (for example, deionized water) to form a negative electrode slurry; and applying the negative electrode slurry onto the negative electrode current collector, followed by processes such as drying and cold pressing, to obtain the negative electrode plate.

[Separator]

In the secondary battery of this application, the separator is disposed between the positive electrode plate and the negative electrode plate for separation. The separator is not limited to any specific type, and may be any well-known porous separator with good chemical stability and mechanical stability. In some embodiments, material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

The secondary battery of this application may be a lithium-ion battery.

The secondary battery of this application may be prepared by using a conventional method. In some embodiments, the positive electrode plate, the negative electrode plate, and the separator may be made into an electrode assembly through winding or lamination. An example of the preparation method includes the following steps.

Step 1: Stack the positive electrode plate, the separator, and the negative electrode plate in sequence such that the separator is located between the positive electrode plate and the negative electrode plate, and then wind the resulting stack to obtain an electrode assembly.

Step 2: Place the electrode assembly in a secondary battery housing, and inject an electrolyte after drying, followed by processes of formation and standing, to obtain the secondary battery.

In some embodiments, the secondary battery of this application may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic. Polypropylene, polybutylene terephthalate, polybutylene succinate, and the like may be listed as the plastic.

Shape of the secondary battery is not particularly limited in this application, and the secondary battery may be cylindrical, rectangular, or of any other shapes. For example, FIG. 2 shows a rectangular secondary battery 5 as an example.

In some embodiments, referring to FIG. 3, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to specific actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be sequentially arranged in a length direction of the battery module 4. Certainly, the batteries may alternatively be arranged in any other manners. Further, the plurality of secondary batteries 5 may be fixed by fasteners.

Optionally, the battery module 4 may further include a shell with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 4 and FIG. 6 show a battery pack 1 as an example. Referring to FIG. 5 and FIG. 6, the battery pack 1 may

include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes the secondary battery, the battery module, or the battery pack provided in this application. The secondary battery, the battery module, or the battery pack may be used as a power source of the electric apparatus or an energy storage unit of the electric apparatus. The electric apparatus may be selected from a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto. The secondary battery, the battery module, or the battery pack may be selected for the electric apparatus based on requirements for using the electric apparatus.

FIG. 7 shows an electric apparatus as an example. The electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

In the following comparative examples and examples, preparation of the electrode plates and the battery and performance tests of the slurry and the battery are performed according to the following methods.

(1) Preparation of positive electrode plate

Positive electrode active material (source: Dynanonic), conductive agent acetylene black, binder polyvinylidene fluoride (PVDF), wetting agent, and dispersant were mixed to uniformity in N-methylpyrrolidone solvent system, and then applied onto an aluminum foil with a primer layer, followed by drying and cold pressing, to obtain the positive electrode plate. A mass ratio of the positive electrode active material, the conductive agent acetylene black, the binder polyvinylidene fluoride (PVDF), the dispersant, and the wetting agent was $(92 - Y_1 - Y_2)$:2.5:5.5:$Y_1$:$Y_2$. A coating amount was 0.02 g/cm$^2$ and a compacted density was 2.4 g/cm$^3$.

The aluminum foil with a conductive primer layer was prepared as follows.

Preparation of conductive primer layer slurry: polyacrylic acid-acrylate copolymer (with a weight-average molecular weight of 340,000) and conductive agent (Super P) at a mass ratio of 40:60 were dissolved/dispersed in deionized water to prepare the conductive primer layer slurry.

The conductive primer layer slurry was applied onto two sides of the aluminum foil, with a 2 μm thick conductive primer layer formed on each side after drying. Then, the aluminum foil with a conductive primer layer was obtained.

(2) Preparation of negative electrode plate

Negative electrode active materials artificial graphite and hard carbon, conductive agent acetylene black, binder styrene-butadiene rubber (SBR), and thickener sodium carboxymethyl cellulose (CMC) at a mass ratio of 90:5:2:2:1 were mixed to uniformity in deionized water, and then applied onto a copper foil, followed by drying and cold pressing, to obtain the negative electrode plate. A coating amount was 0.01 g/cm$^2$ and a compacted density was 1.7 g/cm$^3$.

(3) Assembly of full battery

Polyethylene (PE) porous polymer film was used as the separator. The positive electrode plate, the separator, and the negative electrode plate were stacked in sequence such that the separator was located between the positive and negative electrodes for separation, and then wound to obtain a bare cell. The bare cell was placed in an outer package, an electrolyte was injected, and the outer package was sealed to obtain a full battery (also referred to as "full battery" hereinafter).

In a single full battery, weight of the positive electrode active substance was 11.85 g, and weight of the negative electrode active substance was 6.73 g.

(4) Slurry viscosity test

a. A viscometer was placed on a designated operation table, and the bracket was adjusted to center the horizontal bubble, so that the viscometer was in a horizontal state.
b. Sampling: 500 mL sample under test was taken by using a 500 mL glass beaker, and then subjected to a constant temperature test at 25°C.
c. Testing: the corresponding rotor and rotation speed were selected. After the rotor was determined to have no deformation/stains through visual check, the rotor was tilted and gradually immersed until all the parts below the rotor groove were immersed. The slurry was not allowed to be stirred with the rotor during immersion. The start button was pressed to test the sample for 10 minutes, and data was read and recorded every minute. The final viscosity was the average of 10 groups of data.

FIG. 8 shows an example of instruments used for the slurry viscosity test and the test process.

(5) Slurry fluidity test (gel test)

Test method: 500 mL sample under test was taken by using a 500 mL glass beaker. A 25 cm long and 2 cm wide graduated steel ruler was vertically inserted along the edge of the beaker and slowly extended to a position of 4 cm-5 cm below the liquid surface, the slurry was slowly picked up, and then the flow of the slurry brought up by the steel ruler was checked and photographed to record. The sample with gel was determined to be failed.

(6) Slurry filtration performance test

A 25 cm * 25 cm 200-mesh filter was prepared and folded into a triangle, as shown in FIG. 9; and then 500 mL slurry was taken and quickly poured along one side of three layers of the filter. Timing was started from the slurry being completely poured in, and the filtration time when 300 mL slurry passed through the filter was recorded. If the time was greater than 2 minutes, the slurry was determined to be failed.

(7) Discharge direct current resistance test

At 25°C, the lithium-ion battery was charged to 4.3 V at a constant current and constant voltage of 1.0C (1.0C refers to the nominal capacity); and then with the battery power adjusted to 50% SOC at a rate of 1.0C, the battery was left standing for 5 minutes, and then discharged at a constant current of 4C for 30s (voltage data was collected every second). Resistance after discharging for 30s was calculated, which was the test data.

(8) Number of cycles corresponding to capacity retention rate of 80% at 45°C (hereinafter referred to as "number of cycles at 45°C")

In a constant temperature environment of 45°C, the full battery was charged to 4.3 V at 1C under a voltage of 2.5 V-4.3 V, and then charged to a current less than or equal to 0.05 mA at a constant voltage of 4.3 V. After left standing for 5 min, the full battery was discharged to 2.5 V at 1C. The discharge capacity at this moment was recorded as D0. Such charge and discharge cycle was repeated until the discharge capacity was decreased to 80% of D0. The number of cycles the battery had undergone at this moment was recorded.

**Table 1 Positive electrode active materials, dispersants, and wetting agents in Examples 1 to 5 and Comparative Examples 1 to 4**

| No. | Positive electrode active material | Specific surface area ($m^2/g$) | Dispersant | | | | | | Wetting agent | | X1/X2 |
|---|---|---|---|---|---|---|---|---|---|---|---|
| | | | Type | M1 | M2 | M3 | Weight-average molecular weight ($10^4$) | X1 | Type | X2 | |
| Comparative example 1 | Same as Example 1 | | / | / | / | / | / | / | / | / | / |
| Comparative Example 2 | | | Same as Example 1 | Same as Example 1 | Same as Example 1 | Same as Example 1 | Same as Example 1 | Same as Example 1 | / | / | / |
| Comparative Example 3 | | | / | / | / | / | / | / | Same as Example 1 | Same as Example 1 | / |
| Comparative Example 4 | | | NBR | 0.4 | 0.5 | 0.1 | 22 | 0.20% | Same as Example 1 | Same as Example 1 | Same as Example 1 |
| Example 1 | $LiFePO_4$ | 18.1 | HNBR (hydrogenated nitrile rubber) | 0.45 | 0.549 | 0.001 | 22 | 0.20% | Maleic anhydride-styrene copolymer (with a molecular weight of 5000) | 0.30% | 0.67 |

(continued)

| No. | Positive electrode active material | Specific surface area ($m^2/g$) | Dispersant | | | | | | Wetting agent | | X1/X2 |
|---|---|---|---|---|---|---|---|---|---|---|---|
| | | | Type | M1 | M2 | M3 | Weight-average molecular weight ($10^4$) | X1 | Type | X2 | |
| Example 2 | $LiFe_{0.8}V_{0.2}PO_4$ | 18.7 | Same as Example 1 | | | | | | | | |
| Example 3 | $LiFe_{0.8}V_{0.2}P_{0.97}S_{0.03}O_4$ | 18.5 | | | | | | | | | |
| Example 4 | $Li_{1.1}Fe_{0.8}V_{0.2}P_{0.97}S_{0.03}O_4$ | 18.2 | | | | | | | | | |
| Example 5 | $Li_{1.1}Fe_{0.8}Sn_{0.2}P_{0.97}S_{0.03}O_4$ | 18.1 | | | | | | | | | |

**Table 2 Slurry performance and battery performance in Examples 1 to 5 and Comparative Examples 1 to 4**

| | Positive electrode slurry performance | | | Battery performance | |
|---|---|---|---|---|---|
| No. | Fluidity | Viscosity (mPa. s) | Filtration performance | DCR (based on Example 1) | Cycles at 45°C |
| Comparative Example 1 | Failed | 17000 | Failed | 113% | 3104 |
| Comparative Example 2 | Pass | 13500 | Failed | 120% | 2700 |
| Comparative Example 3 | Failed | 14000 | Pass | 108% | 3000 |
| Comparative Example 4 | Pass | 8100 | Pass | 220% | 559 |
| Example 1 | Pass | 8000 | Pass | 100% | 3800 |
| Example 2 | Pass | 8000 | Pass | 95% | 3950 |
| Example 3 | Pass | 8000 | Pass | 99% | 3700 |
| Example 4 | Pass | 8000 | Pass | 101% | 3500 |
| Example 5 | Pass | 8000 | Pass | 100% | 4100 |

It can be learned from the foregoing tables that with no dispersant and wetting agent added or with only the wetting agent or the dispersant added, the processability of the slurry is poor, and the battery performance is affected. The dispersant and the wetting agent used, especially hydrogenated nitrile rubber and maleic anhydride-styrene copolymer as the dispersant and the wetting agent respectively, can significantly improve the processability of the slurry and/or improve the battery performance.

Based on the hydrogenated nitrile rubber used in Example 1, the percentages of the monomers were adjusted to obtain hydrogenated nitrile rubber with different degrees of hydrogenation, which was used as a dispersant for preparing the positive electrode slurry, as shown in Examples 6 to 12. The weight-average molecular weight of hydrogenated nitrile rubber, the type of the wetting agent, the mass percentages X1 and X2, and X1/X2 were the same as those in Example 1.

**Table 3 Dispersant parameters, slurry performance, and battery performance in Examples 6 to 12**

| | Dispersant | | | | | Positive electrode slurry performance | | | Battery performance | |
|---|---|---|---|---|---|---|---|---|---|---|
| | Type | M1 | M2 | M3 | M3/( M2 + M3) | Fluidity | Viscosity (mPa.s ) | Filtration performance | DCR (based on Example 1) | Cycles at 45°C |
| Example 1 | HNBR | 0.45 | 0.549 | 0.001 | 0.018 | Pass | 8000 | Pass | 100% | 3800 |
| Example 6 | HNBR | 0.45 | 0.55 | 0 | 0 | Pass | 12100 | Pass | 98% | 4000 |
| Example 7 | HNBR | 0.45 | 0.54725 | 0.00275 | 0.005 | Pass | 12600 | Pass | 97% | 4005 |
| Example 8 | HNBR | 0.45 | 0.5445 | 0.0055 | 0.01 | Pass | 10800 | Pass | 99% | 3944 |
| Example 9 | HNBR | 0.45 | 0.539 | 0.011 | 0.02 | Pass | 9500 | Pass | 101% | 3875 |
| Example 10 | HNBR | 0.45 | 0.5335 | 0.0165 | 0.03 | Pass | 10800 | Pass | 101% | 4007 |
| Example 11 | HNBR | 0.45 | 0.5225 | 0.0275 | 0.05 | Pass | 11500 | Pass | 103% | 3830 |
| Example 12 | HNBR | 0.45 | 0.506 | 0.044 | 0.08 | Pass | 9600 | Pass | 205% | 1200 |

As shown in Table 3, as compared with other examples, the degree of hydrogenation of HNBR used in Example 12 is lower, so the battery performance is poorer despite the lower viscosity of the positive electrode slurry.

Based on Example 1, the content percentages of the dispersant and the wetting agent were adjusted to prepare the positive electrode slurry, as shown in Examples 13 to 22. The dispersant and the wetting agent had the same parameters as those in Example 1 except the mass percentages X1 and X2 and X1/X2.

**Table 4 Percentage parameters of dispersant and wetting agent, slurry performance, and battery performance in Examples 13 to 22**

| | Dispe rsant | Wetting agent | | Positive electrode slurry performance | | | Battery performance | |
|---|---|---|---|---|---|---|---|---|
| | X1 (%) | X2 (%) | X1/X 2 | Fluidi ty | Viscosi ty (mPa. s) | Filtrati on perfor mance | DCR (based on Example 1) | Cycles at 45°C |
| Example 13 | 0.05 | 0.5 | 0.10 | Pass | 11800 | Pass | 100% | 3606 |
| Example 14 | 0.1 | 0.5 | 0.20 | Pass | 10000 | Pass | 105% | 3760 |
| Example 15 | 0.5 | 0.5 | 1.00 | Pass | 12500 | Pass | 110% | 3890 |
| Example 16 | 1 | 0.5 | 2.00 | Pass | 7100 | Pass | 113% | 2891 |
| Example 17 | 0.25 | 0.05 | 5.00 | Faile d | 36000 | Pass | 107% | 3500 |
| Example 18 | 0.25 | 0.2 | 1.25 | Faile d | 44000 | Pass | 100% | 3670 |
| Example 19 | 0.25 | 0.3 | 0.83 | Pass | 10200 | Pass | 95% | 3777 |
| Example 20 | 0.25 | 0.8 | 0.31 | Pass | 13000 | Pass | 112% | 3486 |
| Example 21 | 0.25 | 2 | 0.13 | Pass | 5000 | Pass | 108% | 3799 |
| Example 22 | 0.05 | 2 | 0.03 | Faile d | 32500 | Fail | 123% | 550 |

As shown in Table 4, as compared with other examples, X1/X2 in Example 22 is excessively small, so the slurry performance and the battery performance are poorer.

Based on Example 1, the type of the wetting agent was changed to prepare the positive electrode slurry, as shown in Examples 23 to 28.

**Table 5 Type of wetting agent, slurry performance, and battery performance in Examples 23 to 28**

| | Wetting agent | | | Positive electrode slurry performance | | | Battery performance | |
|---|---|---|---|---|---|---|---|---|
| | Type | X2 | X1/X 2 | Fluidit y | Viscosity (mPa. s) | Filtration performan ce | DCR (based on Examp le 1) | Cycle s at 45°C |
| Examp le 23 | No wetting agent added | / | / | Failed | 38000 | Fail | 100% | 1332 |
| Examp le 24 | PVP (polyvinylpyrrolid one) | 0.00 5 | 0.4 | Pass | 16000 | Pass | 115% | 3300 |
| Examp le 25 | Isopropanolamine | 0.01 | 0.2 | Pass | 21600 | Pass | 105% | 3400 |
| Examp le 26 | 2-amino-2methyl-1-propanol | 0.01 | 0.2 | Pass | 11800 | Pass | 104% | 4075 |
| Examp le 27 | Maleic anhydride-styrene copolymer | 0.00 5 | 0.4 | Pass | 9700 | Pass | 108% | 4111 |
| Examp le 28 | Maleic anhydride-styrene copolymer | 0.00 3 | 0.67 | Pass | 8700 | Pass | 103% | 4530 |

As shown in the foregoing table, hydrogenated nitrile rubber is compounded with PVP, isopropanolamine, 2-amino-2methyl-1-propanol, or maleic anhydride-styrene copolymer separately to obtain good processability of the slurry and/or good battery performance.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A dispersant composite, comprising a dispersant and a wetting agent, wherein the dispersant comprises a polymer, the polymer comprising:

    a first monomer unit represented by formula 1;
    a second monomer unit being at least one selected from a group consisting of a monomer unit represented by formula 2 and a monomer unit represented by formula 3; and
    a third monomer unit being at least one selected from a group consisting of a monomer unit represented by formula 4 and a monomer unit represented by formula 5;

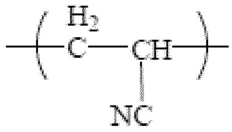

formula 1

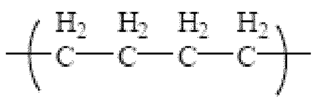

formula 2

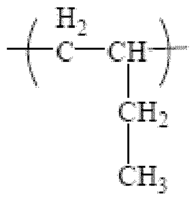

formula 3

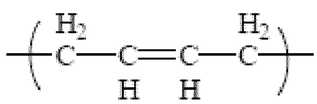

formula 4

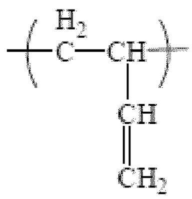

formula 5; and

    surface tension of the wetting agent is 20 mN/m-40 mN/m, and molecular structure of the wetting agent comprises at least one of the following functional groups: -CN, $-NH_2$, -NH-, -N-, -OH, -C=O, -COO-, and -C(=O)-O-C(=O)-.

2. The dispersant composite according to claim 1, wherein based on a total mass of the first dispersant,

a mass percentage of the first monomer unit is M1, M1 being 10%-55%, optionally 25%-55%; and/or
a mass percentage of the second monomer unit is M2, M2 being 40%-80%, optionally 50%-70%; and/or
a mass percentage of the third monomer unit is M3, M3 being 0%-10%, optionally 0.001%-2%.

**3.** The dispersant composite according to claim 2, wherein M3/(M2 + M3) is 0%-5%, optionally 0.001%-1%.

**4.** The dispersant composite according to any one of claims 1 to 3, wherein

the dispersant is hydrogenated nitrile rubber; and/or
a weight-average molecular weight of the dispersant is 50,000-500,000, optionally 150,000-350,000; and/or
based on a total mass of the positive electrode active material, a mass percentage of the dispersant is X1, X1 being 0.05%-1%, optionally 0.1%-0.5%.

**5.** The dispersant composite according to any one of claims 1 to 4, wherein

the wetting agent comprises one or more selected from a small-molecule organic solvent and a low molecular weight polymer, wherein
the small-molecule organic solvent comprises one or more selected from an alcohol amine compound, an alcohol compound, and a nitrile compound, wherein optionally, the alcohol amine compound has 1 to 16 carbon atoms, optionally 2 to 6 carbon atoms; and
the low molecular weight polymer comprises one or more selected from maleic anhydride-styrene copolymer, polyvinylpyrrolidone, and polysiloxane, wherein optionally, a weight-average molecular weight of the low molecular weight polymer is below 6,000, optionally 3,000-6,000.

**6.** The dispersant composite according to claim 5, wherein a mass ratio of the dispersant to the wetting agent is 0.05-20, optionally 0.1-1, and further optionally 0.3-0.8.

**7.** A positive electrode active material composite, comprising a positive electrode active material and the dispersant composite according to any one of claims 1 to 6.

**8.** The positive electrode active material composite according to claim 7, wherein based on a mass of the positive electrode active material,

a mass percentage of the dispersant is X1, X1 being 0.05%-1%, optionally 0.1%-0.5%; and/or
a mass percentage of the wetting agent is X2, X2 being 0.05%-2%, optionally 0.2%-0.8%.

**9.** The positive electrode active material composite according to claim 8, wherein X1/X2 is 0.05-20, optionally 0.1-1, and further optionally 0.3-0.8.

**10.** The positive electrode active material composite according to any one of claims 7 to 9, wherein a specific surface area of the positive electrode active material is 15 $m^2/g$-25 $m^2/g$.

**11.** The positive electrode active material composite according to any one of claims 7 to 10, wherein

the positive electrode active material comprises $Li_{1+x}Fe_{1-y}A_yP_{1-z}R_zO_4$, wherein

$$-0.100 \leq x \leq 0.100;$$

$$0 \leq y \leq 1, \text{ optionally } 0.001 \leq y \leq 0.500;$$

$$0 \leq z \leq 0.100, \text{ optionally } 0.001 \leq z \leq 0.100;$$

A is one or more selected from Zn, Al, Na, K, Mg, Mo, W, Ti, V, Zr, Mn, Ni, Co, Ga, Sn, Sb, Nb, and Ge, optionally one or more from Mn, Ti, V, Ni, Co, and Mg; and
R is one or more selected from B, Si, N, and S.

**12.** The positive electrode active material composite according to any one of claims 7 to 11, wherein a surface of the positive electrode active material is coated with a carbon material.

**13.** A positive electrode slurry, comprising the positive electrode active material composite according to any one of claims 7 to 12, and optionally further comprising one or more of a solvent, a positive electrode conductive agent, and a positive electrode binder.

**14.** The positive electrode slurry according to claim 13, wherein

the solvent comprises N-methylpyrrolidone (NMP); and/or
the positive electrode binder comprises one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin; and/or
the positive electrode conductive agent comprises one or more selected from superconducting carbon, acetylene black, carbon black, Ketjen black, carbon dots, carbon nanotubes, graphene, and carbon nanofiber.

**15.** The positive electrode slurry according to claim 13 or 14, wherein

a solid content of the positive electrode slurry is 40%-70%, optionally 55%-65%; and/or
a viscosity of the positive electrode slurry at 20°C is 3,000 mpa.s-50,000 mpa.s, optionally 10,000 mpa.s-20,000 mpa.s.

**16.** A positive electrode plate, comprising a positive electrode current collector and a positive electrode film layer disposed on at least one surface of the positive electrode current collector, wherein the positive electrode film layer comprises the positive electrode active material composite according to any one of claims 7 to 12, or is formed by applying the positive electrode slurry according to any one of claims 13 to 15; wherein
optionally, the applying method is selected from pulling method, film drawing method, electrostatic spraying method, and spin coating method.

**17.** The positive electrode plate according to claim 16, wherein based on a total mass of the positive electrode film layer,

a mass percentage of the positive electrode active material is W1, W1 being 90%-99.5%, optionally 95%-99%; and/or
a mass percentage of the dispersant is W2, W2 being below 1%, optionally 0.1%-0.5%; and/or
a mass percentage of the wetting agent is W3, W3 being below 2%, optionally 0.1%-0.5%; and/or
a mass percentage of the positive electrode binder is W4, W4 being below 5.5%, optionally 1%-3%; and/or
a mass percentage of the positive electrode conductive agent is W5, W5 being below 2.5%, optionally 0.1%-1%.

**18.** A secondary battery, comprising the positive electrode plate according to claim 16 or 17.

**19.** A battery module, comprising the positive electrode plate according to claim 16 or 17, or the secondary battery according to claim 18.

**20.** A battery pack, comprising the positive electrode plate according to claim 16 or 17, the secondary battery according to claim 18, or the battery module according to claim 19.

**21.** An electric apparatus, comprising the positive electrode plate according to claim 16 or 17, the secondary battery according to claim 18, the battery module according to claim 19, or the battery pack according to claim 20.

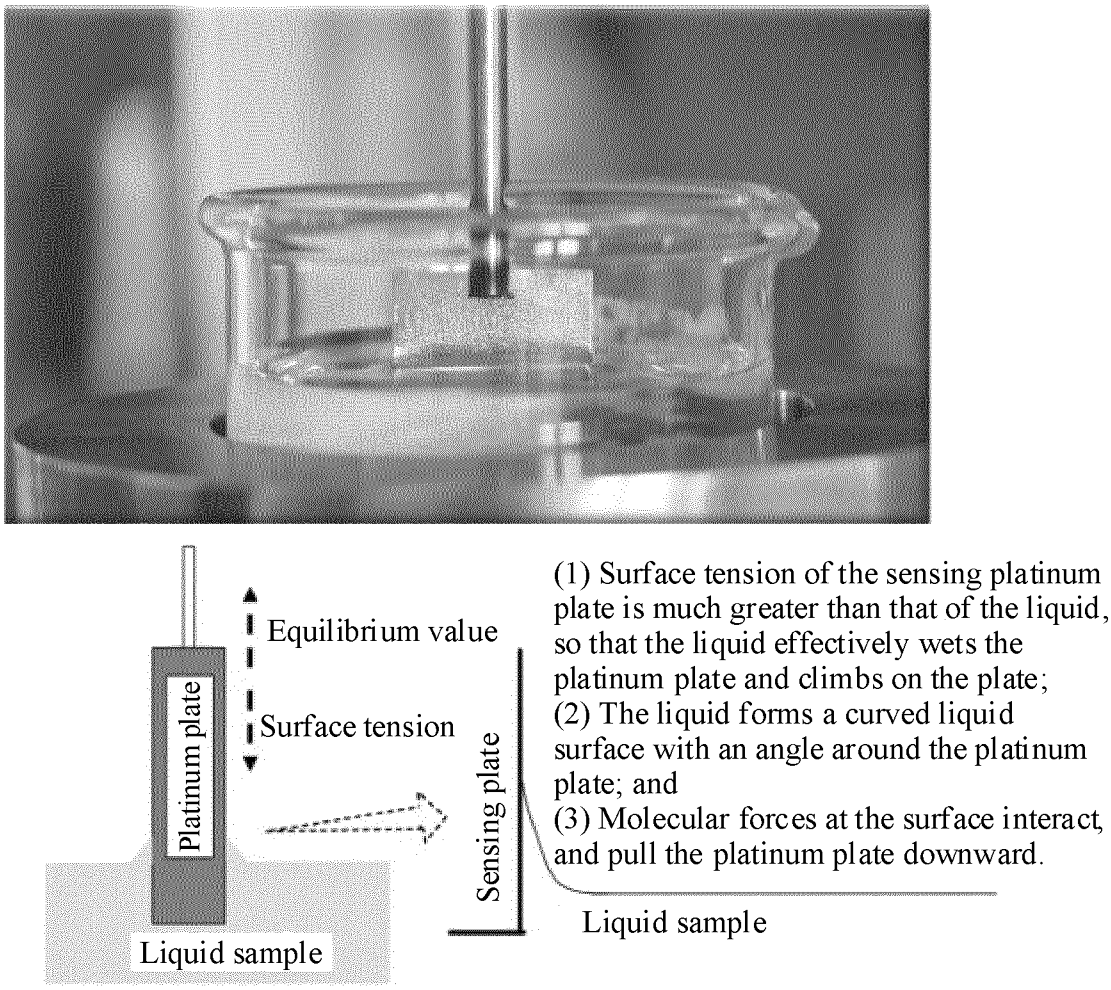
Equilibrium value
Surface tension
Platinum plate
Liquid sample
Sensing plate
(1) Surface tension of the sensing platinum plate is much greater than that of the liquid, so that the liquid effectively wets the platinum plate and climbs on the plate;
(2) The liquid forms a curved liquid surface with an angle around the platinum plate; and
(3) Molecular forces at the surface interact, and pull the platinum plate downward.
Liquid sample

FIG. 1

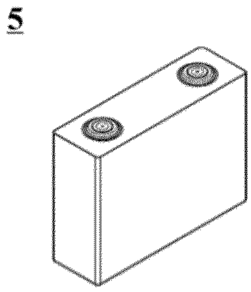
5

FIG. 2

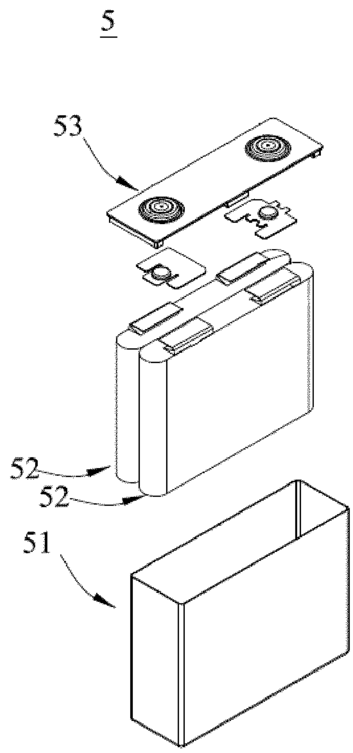


FIG. 3

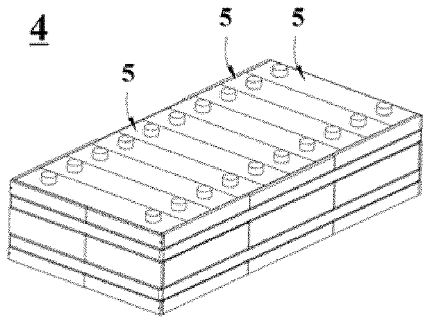


FIG. 4

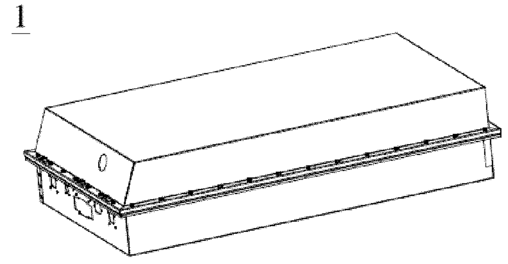


FIG. 5

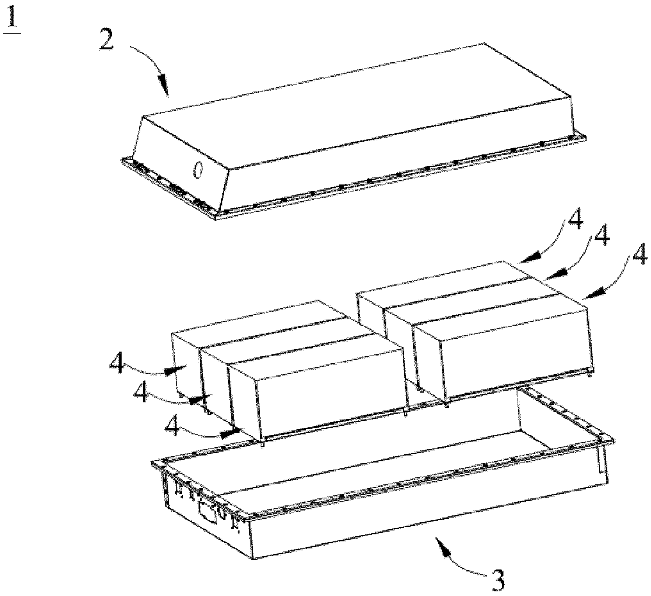


FIG. 6

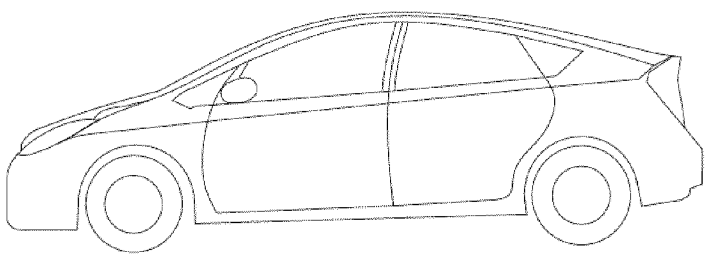

FIG. 7

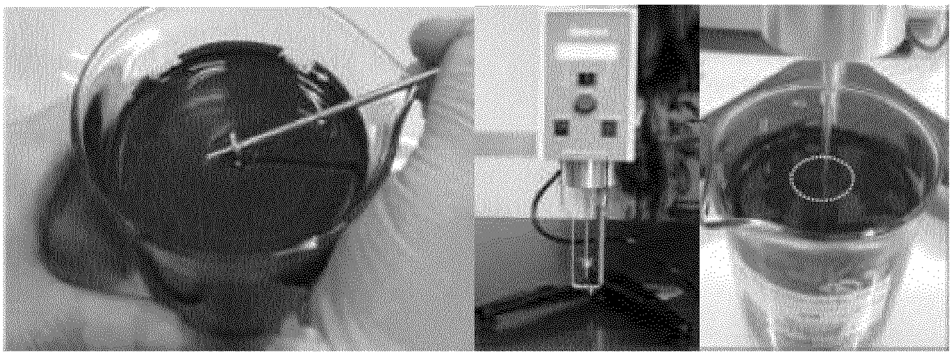

FIG. 8

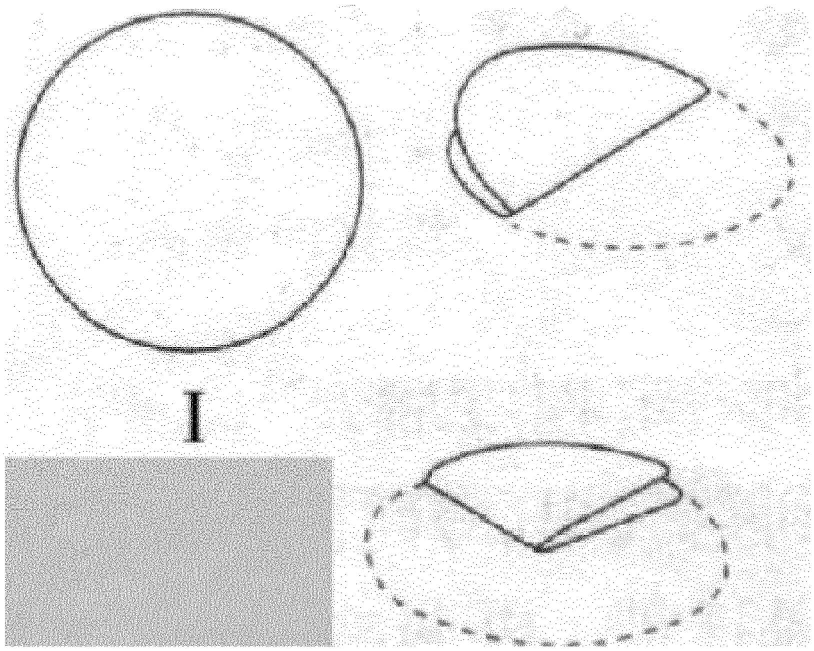


FIG. 9

**INTERNATIONAL SEARCH REPORT**

International application No.
**PCT/CN2022/084860**

**A. CLASSIFICATION OF SUBJECT MATTER**

H01M 4/62(2006.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; DWPI; ENTXT; CNKI; STN: 电池, 正极, 分散剂, 浸润剂, 表面张力, 氢化丁腈橡胶, 苯乙烯-马来酸酐共聚物, battery, positive electrode, dispersing agent, wetting agent, surface tension, hydrogenated nitrile rubber, styrene-maleic anhydride copolymer

**C. DOCUMENTS CONSIDERED TO BE RELEVANT**

| Category* | Citation of document, with indication, where appropriate, of the relevant passages | Relevant to claim No. |
|---|---|---|
| X | CN 114174384 A (LG CHEMICAL LTD.) 11 March 2022 (2022-03-11) description, paragraphs 19-287 | 1-21 |
| Y | CN 114174384 A (LG CHEMICAL LTD.) 11 March 2022 (2022-03-11) description, paragraphs 19-287 | 1-21 |
| Y | JP 2017130399 A (MATSUMOTO YUSHI SEIYAKU K. K.) 27 July 2017 (2017-07-27) description, paragraphs 9-163 | 1-21 |
| X | CN 110431697 A (LG CHEMICAL LTD.) 08 November 2019 (2019-11-08) description, paragraphs 11-92, and claims 1-15 | 1-21 |
| Y | CN 110431697 A (LG CHEMICAL LTD.) 08 November 2019 (2019-11-08) description, paragraphs 11-92, and claims 1-15 | 1-21 |
| Y | JP 2016046188 A (TOYO INK SC HOLDINGS CO., LTD.) 04 April 2016 (2016-04-04) description, paragraphs 14-122 | 1-21 |
| A | CN 114243023 A (NINGDE CONTEMPORARY AMPEREX TECHNOLOGY CO., LTD.) 25 March 2022 (2022-03-25) entire document | 1-21 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 November 2022** | **28 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/084860**

**C. DOCUMENTS CONSIDERED TO BE RELEVANT**

| Category* | Citation of document, with indication, where appropriate, of the relevant passages | Relevant to claim No. |
|---|---|---|
| A | CN 113795526 A (NINGDE AMPEREX TECHNOLOGY LTD.) 14 December 2021 (2021-12-14)<br>entire document | 1-21 |

Form PCT/ISA/210 (second sheet) (January 2015)

**INTERNATIONAL SEARCH REPORT**
**Information on patent family members**

International application No.
**PCT/CN2022/084860**

| Patent document cited in search report | Publication date (day/month/year) | Patent family member(s) | Publication date (day/month/year) |
|---|---|---|---|
| CN 114174384 A | 11 March 2022 | WO 2021141376 A1 | 15 July 2021 |
| | | JP 2022536304 A | 15 August 2022 |
| | | EP 3978564 A1 | 06 April 2022 |
| | | KR 20210089093 A | 15 July 2021 |
| JP 2017130399 A | 27 July 2017 | JP 6152177 B1 | 21 June 2017 |
| CN 110431697 A | 08 November 2019 | KR 20180107758 A | 02 October 2018 |
| | | WO 2018174619 A1 | 27 September 2018 |
| | | US 2020295347 A1 | 17 September 2020 |
| | | KR 102323808 B1 | 10 November 2021 |
| | | US 11283058 B2 | 22 March 2022 |
| | | CN 110431697 B | 19 July 2022 |
| JP 2016046188 A | 04 April 2016 | JP 6709586 B2 | 17 June 2020 |
| CN 114243023 A | 25 March 2022 | CN 114243023 B | 01 July 2022 |
| CN 113795526 A | 14 December 2021 | WO 2022155830 A1 | 28 July 2022 |

Form PCT/ISA/210 (patent family annex) (January 2015)